# EUROPÄISCHE PATENTSCHRIFT

(11) **EP 2 271 849 B1**
(45) Veröffentlichungstag und Bekanntmachung des Hinweises auf die Patenterteilung: **07.05.2014**
(21) Anmeldenummer: 08784781.0
(22) Anmeldetag: 15.07.2008
(51) Int. Cl.: F16B 2/00, B23K 26/22, B23K 26/00

(54) **VERFAHREN ZUM FIXIEREN EINES VERBINDUNGSELEMENTS AUF EINEM WERKSTÜCK UND BAUTEIL AUS EINEM WERKSTÜCK MIT EINEM DARAUF FIXIERTEN VERBINDUNGSELEMENT**
METHOD FOR AFFIXING A CONNECTION ELEMENT TO A WORK PIECE AND COMPONENT MADE FROM A WORK PIECE COMPRISING A CONNECTION ELEMENT AFFIXED THERETO
PROCÉDÉ DE FIXATION D'UN ÉLÉMENT DE LIAISON SUR UNE PIÈCE, ET COMPOSANT COMPRENANT UNE PIÈCE AVEC UN ÉLÉMENT DE LIAISON FIXÉ SUR CELLE-CI

(30) Priorität: 30.04.2008 DE 102008021636
(43) Veröffentlichungstag der Anmeldung: 12.01.2011
(73) Patentinhaber: ESK Ceramics GmbH & Co.KG, 87437 Kempten (DE)
(72) Erfinder: BERGER, Franz, 87527 Sonthofen (DE); BURTSCHE, Daniel, 87474 Buchenberg (DE); MEYER, Jürgen, 87437 Kempten (DE); SCHREINER, Sven, 81667 München (DE)
(74) Vertreter: Merkle, Gebhard
(86) Internationale Anmeldenummer: PCT/EP2008/005773
(87) Internationale Veröffentlichungsnummer: WO 2009/132684

(56) Entgegenhaltungen:
- EP-A- 0 628 376
- WO-A-2005/030426
- DE-A1- 10 147 627
- GB-A- 887 161
- US-A- 5 502 292

## Beschreibung

### Gebiet der Erfindung

Die Erfindung betrifft ein Verfahren zum Fixieren eines Verbindungselements, das die reibungserhöhende, spielfreie, reversible Verbindung von zu fügenden Werkstücken ermöglicht, auf einem Werkstück sowie ein Bauteil, bestehend aus einem metallischen Werkstück und einem darauf durch lokal begrenzte Schweißpunkte montage- und transportsicher fixierten Verbindungselement. Solche Bauteile eignen sich zur kraftschlüssigen, reibungserhöhenden, spielfreien, reversiblen Verbindung von zu fügenden Werkstücken.

### Hintergrund der Erfindung

Kraftschlüssige Verbindungen werden in allen Bereichen des Maschinen-, Anlagen- und Kraftfahrzeugbaus häufig zur Übertragung von Querkräften oder Drehmomenten eingesetzt. Die Größe der jeweils übertragbaren Kraft hängt neben den konstruktiven Gegebenheiten in erster Linie vom Haftreibungswert (Haftbeiwert) der miteinander verbundenen Bauteiloberflächen ab. Man ist daher bestrebt, Maßnahmen zur Reibungserhöhung bei solchen kraftschlüssigen Verbindungen vorzusehen, um möglichst große Querkräfte und Drehmomente sicher übertragen zu können.

### Stand der Technik

Es ist bekannt, zur Erhöhung der Haltekräfte in Schraub- und Klemmverbindungen reibungserhöhende Zwischenlagen zu verwenden. Aus der EP 0 961 038 B1 ist ein Verbindungselement bekannt zur reibungserhöhenden spielfreien reversiblen Verbindung von zu fügenden Werkstücken. Das Verbindungselement besteht aus einer federelastischen Folie aus Stahl, die an ihrer Oberfläche Partikel definierter Größe trägt, die mittels einer Bindephase auf der federelastischen Folie fixiert sind. Die Partikel bestehen aus einem Hartstoff, vorzugsweise aus Diamant, kubischem Bornitrid, Aluminiumoxid, Siliziumcarbid oder Borcarbid. Die Eigenfestigkeit der Folie ist mindestens ebenso hoch wie die Eigenfestigkeit der zu fügenden Werkstücke und die Bindephase hat eine Festigkeit, die jener der zu fügenden Flächen der Werkstücke zumindest entspricht.

Bei der Montage des in EP 0 961 038 B 1 beschriebenen Verbindungselements können sich jedoch einige Probleme ergeben. Eine häufige Ausführungsform des reibungserhöhenden Verbindungselementes aus EP 0 961 038 B 1 sind gestanzte, ebene Ringe oder Scheiben, die bei der Montage der jeweiligen kraftschlüssigen Verbindung manuell eingelegt werden. Dieser Vorgang ist umständlich und birgt zudem das Risiko, dass eine derartige - meist nur ca. 0.1 mm dünne - Einlage unbemerkt verloren geht, bevor die Verbindung endgültig zusammengebaut ist.

Eine Vormontage bei Komponentenlieferung ist bei dem Verbindungselement gemäß EP 0 961 038 B1 nicht möglich. Das Verbindungselement entsprechend EP 0 961 038 B1 ist auch mit freiem Auge kaum von blanken metallischen Bauteilen zu unterscheiden, da die Oberfläche zu ca. 90% aus Chemisch Nickel besteht. Es ist für das Montagepersonal daher manchmal schwierig, das tatsächliche Vorhandensein des für die Betriebssicherheit der gesamten Verbindung unerlässlichen Verbindungselements zu erkennen. Damit können erhebliche Sicherheitsrisiken verbunden sein. Bei KfZ-Motoren werden beispielsweise Zahnräder im Antriebssystem Kurbelwelle-Nockenwelle mit derartigen Verbindungselementen montiert. Ein Versagen der hier üblichen Schraubverbindung kann zu spontanen Motor-Totalschäden führen.

Als Lösung wurde ein Verkleben des Verbindungselements auf einer der Fügeflächen der zu verbindenden Werkstücke versucht. Das erfordert absolut saubere, ölfreie und trockene Flächen, die im Motorenbau nur mit großem Aufwand sicherzustellen sind. Klebstoffreste beeinträchtigen zudem den charakteristischen Kraftübertragungsmechanismus der reibungserhöhenden Zwischenlagen nach EP 0 961 038 und erschweren im Reparaturfall die Wiedermontage einer absichtlich gelösten Verbindung.

Um die Anforderungen bezüglich der Unverlierbarkeit des Verbindungselements erfüllen zu können, wird in der DE 101 47 627 A1 ein Verbindungselement vorgeschlagen, das eine außerhalb der Fügeflächen des Verbindungselements liegende Bauteilfläche aufweist, die derart geformt ist, dass sie eine elastische oder federnde Eigenschaft aufweist, die eine reversible Fixierung des Verbindungselements auf einem zu fügenden Werkstück ermöglicht. Die Bauteilfäche ist vorzugsweise in Form von aus der Fügefläche herausragenden Fahnen oder Klemmflügeln ausgebildet. Mit diesen Verbindungselementen ist eine manuelle Vormontage möglich.

Die in DE 101 47 627 A1 vorgeschlagene Lösung hat jedoch den Nachteil, dass die Handhabung der Verbindungselemente mit den abstehenden Fahnen/Klemmflügeln schwierig ist, wodurch ein Beschädigungsrisiko während der unvermeidlichen Handlingsschritte im gesamten Herstellungsprozess sowie den nachgelagerten Logistik- und Montageprozessen entsteht. Durch den erhöhten Raumbedarf während des Beschichtungsprozesses und auch bei der Verpackung und dem Transport entstehen zudem höhere Kosten für das Verbindungselement.

Aus der DE 100 45 031 A1 ist eine Schweißverbindung von duktilem Eisen mit Stahl bekannt, wie beispielsweise einer Lenkgabel aus duktilem Eisen mit einem Stahlrohrmaterial, bei dem als Schweißzusatzwerkstoff ein metallisches Material zwischen einer ersten Komponente aus duktilem Eisen und einer zweiten Komponente aus Stahl aufgebracht wird. Das metallische Material enthält Nickel mit einer Konzentration zwischen 22 und 32%. Als Schweißverfahren wird hier ein Reibungsschweißverfahren oder ein Laserschweißverfahren eingesetzt. Beim Reibungsschweißverfahren werden zunächst Sprühüberzüge auf Nickelbasis vor der Verbindung der Komponenten aufgebracht. Beim Laserschweißverfahren werden unbeschichtete Teile mit einem selbstfließenden Material, das etwa 70% Nickel enthält, mittels Laserschweißen verbunden. Bei den in der DE 100 45 031 A1 beschriebenen Verfahren entsteht eine Schweißnaht oder Raupenzone entlang der Verbindungsfläche. Solche Schweißnähte oder Raupenzonen auf Bauteiloberflächen würden jedoch die kraftschlüssige Verbindung solcher Bauteile in nachteiliger Weise beeinträchtigen.

### Aufgabe der Erfindung

Der Erfindung liegt daher die Aufgabe zugrunde, unter Überwindung der Nachteile des Standes der Technik die montage- und transportsichere Fixierung eines an sich bekannten, reibungserhöhenden Verbindungselements zu ermöglichen, wobei zudem eine automatisierte Montage des Verbindungselements ermöglicht werden soll, ohne die Funktionseigenschaften des Verbindungselements zu beeinträchtigen, also eine kraftschlüssige, reibungserhöhende, spielfreie, reversible Verbindung von Werkstücken zu schaffen.

### Zusammenfassung der Erfindung

Die vorstehende Aufgabe wird erfindungsgemäß gelöst durch ein Verfahren zum Fixieren eines Verbindungselements auf einem metallischen Werkstück gemäß Anspruch 1, ein Bauteil aus einem metallischen Werkstück und einem darauf fixierten Verbindungselement gemäß Anspruch 8 sowie die Verwendung eines solchen Bauteils gemäß Anspruch 16. Vorteilhafte bzw. besonders zweckmäßige Ausgestaltungen des Anmeldungsgegenstandes sind in den Unteransprüchen angegeben.

Gegenstand der Erfindung ist somit ein Verfahren zum Fixieren eines Verbindungselements, das die reibungserhöhende, spielfreie, reversible Verbindung von zu fügenden Werkstücken ermöglicht, auf einem metallischen Werkstück, wobei das Verbindungelement aus einer metallischen Folie besteht, die an ihren Fügeoberflächen Hartstoffpartikel trägt, welche mittels einer metallischen Bindephase auf der metallischen Folie fixiert sind, das dadurch gekennzeichnet ist, dass das Verbindungselement auf dem metallischen Werkstück durch Schweißen unter Ausbildung lokal begrenzter Schweißpunkte montage- und transportsicher fixiert wird.

Gegenstand der Erfindung ist ebenso ein Bauteil, bestehend aus einem metallischen Werkstück und einem darauf durch lokal begrenzte Schweißpunkte montage- und transportsicher fixierten Verbindungselement, wobei das Verbindungselement die reibungserhöhende, spielfreie, reversible Verbindung von zu fügenden Werkstücken ermöglicht und aus einer metallischen Folie besteht, die an ihren Fügeoberflächen Hartstoffpartikel trägt, welche mittels einer metallischen Bindephase auf der metallischen Folie fixiert sind.

Gegenstand der Erfindung ist ebenso die Verwendung eines erfindungsgemäβen Bauteils zur kraftschlüssigen, reibungserhöhenden, spielfreien, reversiblen Verbindung von zu fügenden Werkstücken im Maschinen-, Anlagen- und Kraftfahrzeugbau.

Das erfindungsgemäße Verfahren zum Fixieren eines Verbindungselements erlaubt die Verwendung ebener Bauteile, die auch bei den verschiedenen während des Herstellungsprozesses erforderlichen Handlingsschritten wenig beschädigungsanfällig sind, im Gegensatz zur DE 101 47 627 A1 mit den aus der Ebene herausragenden "Klemmflügeln", bei denen die Gefahr der Beschädigung bei den Handlingsschritten im Herstellungsprozess und während des Transports besteht.

Außerdem ergibt sich durch die erfindungsgemäße Lösung ein Transportvorteil bei den Verbindungselementen, da im Gegensatz zu DE 101 47 627 A1 das erfindungsgemäß eingesetzte Verbindungselement als raumsparende flache Scheibe ausgeführt ist.

Das Verbindungselement ist mit höherer Sicherheit als bei der DE 101 47 627 A1 und im Gegensatz zur EP 0 961 038 B1 verliersicher fixiert.

Eine automatisierte Montage der beiden zu verbindenden Werkstücke ist im Unterschied zur EP 0 961 038 B1 und zur DE 101 47 627 A1 mit dem erfindungsgemäß fixierten Verbindungselement möglich. Ebenso ist auch das Fixierungsverfahren selbst automatisierbar, so dass insgesamt eine automatisierte Montage des Verbindungselements möglich ist, im Unterschied zur EP 0 961 038 B1 und zur DE 101 47 627 A1.

Das Schweißen von diamant- bzw. hartstoffhaltigen Nickelschichten ist im Stand der Technik nicht bekannt. Da beim Schweißen an den Werkstückoberflächen lokal sehr hohe Temperaturen auftreten können, besteht die Gefahr, dass die Hartstoffe oxidiert werden und die Nickel-Hartstoff-Schichten durch das Schweißen lokal zerstört werden. Überraschenderweise hat sich gemäß der Erfindung gezeigt, dass diese Zerstörung der Schicht zwar lokal eintritt, aber kontrollierbar sehr eng begrenzt werden kann. Zusätzlich konnte überraschenderweise sogar eine Reibwerterhöhung bei den erfindungsgemäß fixierten Verbindungselementen gegenüber den herkömmlich eingelegten Verbindungselementen beobachtet werden, die in der Größenordnung von etwa 10% liegt und zudem verbunden ist mit einer geringeren Standardabweichung der Reibwerte. Dies führt zu einer höheren Prozesssicherheit bei den Anwendungen.

### Detaillierte Beschreibung der Erfindung

Gemäß der Erfindung wird das Verbindungselement durch Schweißen unter Ausbildung lokal begrenzter Schweißpunkte montage- und transportsicher auf einem metallischen Werkstück fixiert.

Die nachfolgenden Anforderungen an die erfindungsgemäß eingesetzten Schweißverfahren bzw. Schweißstellen müssen erfüllt sein, um die Funktionsweise des Verbindungselements bzw. der Reibfolie im Einsatz zu gewährleisten:
- Es darf zu keiner Funktionseinschränkung der reibwerterhöhenden Schicht durch etwaige Überhöhungen des Fügematerials zwischen den Reibpartnern in der Fuge oder übermäßiger Deformationen der Scheibe an sich kommen.
- Die Festigkeit der Schweißverbindung bzw. der Schweißpunkte muss derart gewählt sein, dass eine Transport- und Montagesicherung vor der Montage sichergestellt ist, auch über einen längeren Zeitraum und eine größere Distanz, und dass ein häufigeres Öffnen und Wiederverschrauben der Baugruppe nicht zu einem Verlust der Reibfolie führt (Unverlierbarkeit). Dabei sind die erforderlichen Mindestwerte für die Festigkeit abhängig von den Materialpaarungen Reibfolie/Grundmaterial des metallischen Werkstücks.
- Die metallische Bindephase, insbesondere die Chemisch Nickel-Schicht mit den eingebetteten Hartstoffpartikeln darf nicht durch Nebenprodukte oder Hilfsmittel kontaminiert werden.
- Der Einflussbereich der Fügestelle sollte sich auf Grund seiner Abmessungen im Mikrobereich befinden und im Verhältnis zur gesamten Funktionsfläche unter 5% betragen, vorzugsweise deutlich unter 5%. Bei größeren Dimensionierungen müssen konstruktive Anpassungen geschaffen werden.
- Der Schweißprozess sollte automatisierbar sein, wobei hohe Taktgeschwindigkeit bei gleichzeitig hoher Prozesssicherheit und Reproduzierbarkeit möglich sein sollten.

Als Schweißverfahren kommen erfindungsgemäß alle Verfahren in Frage, die es ermöglichen, lokal eng begrenzte Schweißungen durchzuführen bzw. exakt lokalisierte Schweißpunkte zu setzen. Insbesondere kommen dabei das Laserschweißen und das Widerstandsschweißen in Frage, wobei das Laserschweiβen bevorzugt ist.

Für das bevorzugte Laserschweißen werden bevorzugt Nd:YAG-Festkörper-Laserschweißanlagen eingesetzt.

Vorzugsweise werden hierbei gepulste Laser mit einer Wellenlänge zwischen 900 und 1200 nm, vorzugsweise knapp über 1000 nm, eingesetzt.

### Der Schweißablauf beim Laserschweißen ist wie folgt:

Zunächst werden die Verbindungselemente mittels einer Vorrichtung auf die zu fügende Werkstückoberfläche positioniert, beispielsweise auf der Stirnseite eines Steuerrades in Stirnpressverbänden Kurbelwelle oder Nockenwelle bzw. im Steuertrieb von Verbrennungsmotoren, und mit einer definierten Kraft belastet. Diese Anpresskraft soll ein flächiges Aufliegen des Verbindungselements auf der Fügeoberfläche des Werkstücks, z.B. auf der Stirnseite des Steuerrades gewährleisten. Danach erfolgt das Setzen der Schweißpunkte, vorzugsweise über das Remote- oder Spiegelverfahren. Im Falle der Ausbildung des Verbindungselements als reibungserhöhende Lochscheibe hat sich für die heute gebräuchlichen Scheibendurchmesser eine Anzahl von 3 - 7 Schweißpunkten bewährt, die in gleichmäßigen Abständen auf der Oberfläche des Verbindungselements gesetzt werden.

Überraschenderweise hat sich gezeigt, dass beim Schweißen mittels eines Wärmeleitungsschweißverfahrens wie dem Laserschweißen beim Schweißen der dünnen Folien als Verbindungselemente auf porösen Grundwerkstoffen, bei denen es aufgrund ihrer porösen Struktur nicht zu einem Tiefschweißeffekt kommt, dennoch eine Schweißverbindung mit ausreichender Festigkeit erzielt werden kann.

Die vorangelegte Anpresskraft ist sehr vorteilhaft, um einen möglichst kleinen Schweißspalt zwischen das Verbindungselement und den Grundkörper zu erzielen, was wiederum entscheidend für eine gute Schweißpunktqualität ist.

Die Anpresskraft liegt vorzugsweise im Bereich von 20 bis 100 N, weiter vorzugsweise bei etwa 50 N.

Ein weiteres mögliches Schweißverfahren ist das Widerstandspunktschweiβen, bei dem das metallische Werkstück und das Verbindungselement durch zwei gegenüberliegende Elektroden an einem Punkt zusammengepresst werden. Durch die Elektroden wird ein Schweißstrom eingeleitet. Das Aufschmelzen des Grundwerkstoffes erfolgt an der Stelle des größten elektrischen Widerstandes, das heißt in der Regel am Übergang zwischen dem metallischen Werkstück und dem Verbindungselement. Die Elektroden bestehen in der Regel aus Kupfer oder Kupferlegierungen, da diese Materialien Strom und Wärme sehr gut leiten.

Die Elektroden beim Widerstandspunktschweißen haben vorzugsweise einen Durchmesser von etwa 20 mm. Die obere Elektrode, welche auf die Reibfolie presst, besitzt einen balligen Spitzendurchmesser von vorzugsweise 3 mm, während die untere Elektrode, die das Grundmaterial kontaktiert, einen Spitzendurchmesser von beispielsweise 6 mm hat. Dadurch können der Stromfluss und der Strompfad angepasst werden an die extrem unterschiedlich dicken Bauteile Verbindungselement (dünne Folie) und zu fügendes Werkstück (dick).

Für das Widerstandsschweißen wird ebenfalls vorzugsweise eine ungerade Anzahl von Schweißpunkten eingesetzt, vorzugsweise 3-7 Schweißpunkte, um im späteren Einsatz den Rundlauf zu unterstützen.

Das beim erfindungsgemäßen Verfahren bzw. beim erfindungsgemäßen Bauteil eingesetzte Verbindungselement umfasst als Trägermaterial eine dünne metallische Folie, vorzugsweise mit einer Stärke von ≤ 0,2 mm, weiter vorzugsweise von 0,1 bis 0,2 mm. Gemäß einer bevorzugten Ausführungsform besitzt die metallische Folie eine Eigenfestigkeit, die mindestens ebenso hoch ist wie die Eigenfestigkeit der zu fügenden Werkstücke. Das erfindungsgemäß eingesetzte Verbindungselement entspricht vorzugsweise einem aus EP 0 961 038 bekannten Verbindungselement. Zu den Möglichkeiten der Ausgestaltung von metallischen Folien, Harstoffpartikeln und metallischer Bindephase kann daher auf die EP 0 961 038 verwiesen werden.

Als Verbindungselement gemäß EP 0 961 038 B1 werden insbesondere beschichtete dünne Stahlbleche, sogenannte Reibfolien, eingesetzt. Als Grundmaterial für die Reibfolie werden vorzugsweise Stähle eingesetzt, insbesondere feder- bzw. biegungselastische Stähle, besonders bevorzugt mit einer Zugfestigkeit im Bereich von 350 - 1850 N/mm², noch weiter bevorzugt von 800-1600 N/mm². Das für das Verbindungselement eingesetzte Stahlblech hat vorzugsweise eine Dicke von 0,1 - 0,2 mm. Auch dickere beschichtete Stahlbleche können geschweißt werden, können aber zu einer Überschreitung der Maß-Summentoleranz einer Baugruppe führen, die konstruktive Änderungen an eben dieser erforderlich machen würde.

Die Reibfolien werden mit einer Beschichtung versehen, die aus einer metallischen Bindephase besteht, in der Hartpartikel eingelagert sind. Die Hartpartikel bestehen vorzugsweise aus einem Material mit einer Druck- und Scherfestigkeit, welche jene der zu fügenden Werkstücke übertifft. Die Beschichtung erfolgt vorzugsweise beidseitig. Die Hartpartikel sind vorzugsweise aus der Gruppe ausgewählt, bestehend aus Carbiden, Nitriden, Boriden, Diamant, SiO₂ und Al₂O₃, vorzugsweise aus der Gruppe, bestehend aus Diamant. Siliciumcarbid und Borcarbid. Vorzugsweise besitzen die Hartstoffpartikel Korngrößen zwischen 6 und 80 µm, weiter vorzugsweise eine mittlere Korngröße D₅₀ im Bereich von 8-35 µm. Besonders bevorzugt werden Hartpartikel mit einer mittleren Korngröße von 10 bis 20 µm eingesetzt. Die Bestimmung der Korngröße erfolgt in bekannter Weise mittels Laserbeugung, beispielsweise mit einem Gerät der Firma CILAS (CILAS 1064), an Feststoffdispersionen.

Die metallische Bindephase besitzt gemäß der EP 0 961 038 vorzugsweise eine Festigkeit, die jener der zu fügenden Flächen der Werkstücke zumindest entspricht. Besonders bevorzugt als metallische Bindephase ist eine galvanotechnisch erzeugte Chemisch-Nickel-Schicht. Als Hartstoffpartikel sind Diamantpartikel einer mittleren Korngröße D₅₀ im Bereich von 8-35 µm besonders bevorzugt. Weiter vorzugsweise weist die metallische Bindephase eine Schichtdicke auf, die geringer ist als die mittlere Korngröße der Hartstoffpartikel.

Die erfindungsgemäße Fixierung eines reibungserhöhenden Verbindungselementes kann auf Grundkörpern verschiedenster, mit den beschriebenen Verfahren schweißbarer metallischer Werkstoffe durchgeführt werden. Insbesondere sind als geeignete Werkstoffe bzw. Werkstoffe, die in den entsprechenden Anwendungen relevant sind, zu nennen Gußwerkstoffe, Stahl, Aluminium und Sintermetalle. Insbesondere sind die im Maschinen- und Automobilbau üblichen Konstruktionswerkstoffe Grauguß, Stahl, Aluminium und Sinterstahl zu nennen.

Eine geeignete Festigkeitsprüfmethode für die erfindungsgemäß erzeugten Schweißverbindungen ist der Kopfzugtest. Beim Kopfzugtest handelt es sich um eine zerstörende Prüfung, die vor allem dann Anwendung findet, wenn an Probeschweißungen unter möglichst fertigungsähnlichen Bedingungen optimale Einstellwerte für eine bestimmte Schweißaufgabe zu ermitteln sind. Die Funktionsweise gestaltet sich derart, dass die Schelle, in die der Prüfling eingespannt wird, durch die Prüfmaschine von oben durch eine konstante Kraft belastet wird. Da die durch die Prüfmaschine (Kraftaufnehmer bis 5 kN) aufgebrachte Last durch das Eigengewicht der Schelle und des Prüflings verstärkt wird, erfolgt eine Korrekturrechnung von zuzüglich 4 N, was der Gewichtskraft von Schelle und Prüfling entspricht. Dann erfolgt die Bewegung der Prüfmaschine mit einer Geschwindigkeit von 3 mm/min nach unten über den Stempel, der auf der Grundplatte steht. Das Versagen der Proben erfolgt überwiegend, indem eine Schweißstelle nach der anderen nachgibt, lediglich in Einzelfällen kommt es zum gleichzeitigen Versagen mehrerer Schweißpunkte.

Die Abzugskraft richtet sich neben dem Fügeverfahren nach Anzahl und Durchmesser der Fügestellen und beträgt beispielsweise bei 3 Fügestellen vorzugsweise 10 bis 200 N.

Die größte Festigkeit besitzen Verbindungen des Widerstandspunktschweiβens (Pressschweißverfahren). Gründe für diese im Vergleich zu den anderen Schweißverfahren höhere Festigkeit sind unter anderem die mechanische Belastung durch die Elektroden und die größeren Schweißpunkte, die einen Durchmesser von etwa 3mm haben. Dadurch bedingt erhält man eine ausgedehnte Querschnittsfläche, die einer höheren Belastung standhält. Andererseits ist aufgrund der größeren Schweißpunkte aber auch der Materialaufwurf höher und die durch die Schweißung beeinflusste Fläche größer.

Verbindungen mittlerer Festigkeit werden durch Laserstrahlschweißungen (Schmelzschweißen) erhalten, wobei die Schweißpunkte im Überlapp- bzw. Parallelstoß geschweißt werden können. Die Durchmesser der so erzeugten Schweißpunkte entsprechen dem Laserstrahldurchmesser.

Das Laserschweißverfahren ist bevorzugt, da hier gegenüber dem Widerstandspunktschweißen kleinere Schweißpunkte möglich sind, so dass die Schädigung der Reibfolie geringer ist, während die Haftfestigkeit immer noch vergleichsweise hoch ist.

Neben Schweißungen im Überlapp- bzw. Parallelstoß können die Schweißpunkte auch in Form einer Kehlnaht (T-Stoß) und im Stumpfstoß ausgeführt werden. Durch die verschiedenen möglichen Stoßarten bzw. Ausführungsformen und Positionen beim Schweißen kann das erfindungsgemäße Fixierungs/Fügeverfahren an die Umgebungskonstruktion angepasst werden.

Die Oberflächenrauhigkeit und Oberflächenreinheit spielen beim Laserstrahlschweißen eine größere Rolle als beim Widerstandspunktschweißen. Die Rauhigkeitstiefe richtet sich nach der eingesetzten Korngröße der eingebetteten Hartpartikel auf der Reibfolie und liegt vorzugsweise bei einem R_{z}-Wert von unterhalb 30µm, kann aber auch darüber liegen.

Überraschenderweise hat sich gezeigt, dass beim Einsatz erfindungsgemäßer Bauteile im verschraubten und montierten Zustand, trotz des erhöhten Materialauftrags an den Schweißpunkten, ein höheres Torsionsmoment übertragen werden kann als mit den herkömmlich eingelegten Verbindungselementen, wie auch durch die nachfolgenden Beispiele veranschaulicht.

### Kurze Beschreibung der beigefügten Zeichnungen

**Abbildungen 1a, 1b, 1c** und **1d** zeigen lichtmikroskopische Gefügeaufnahmen eines Querschliffs der in Beispiel 1 durchgeführten Laserschweißung (Überlappstoß) in 100-facher, 200-facher, 500-facher und 1000-facher Vergrößerung;

**Abbildungen 2a, 2b** und **2c** zeigen lichtmikroskopische Gefügeaufnahmen eines Querschliffs der in Beispiel 2 durchgeführten Laserschweißung (Eckstoß) in 100-facher, 200-facher und 500-facher Vergrößerung.

### Beispiele und Vergleichsbeispiele

Die nachfolgenden Beispiele und Vergleichsbeispiele dienen zur weiteren Erläuterung der Erfindung.

### Beispiel 1

### Laserschweißen innerhalb Funktionsfläche

Zur Herstellung eines erfindungsgemäßen fixierten Verbindungselementes werden zunächst ringförmige Lochscheiben mit einem Außendurchmesser von 27 mm, einem Innendurchmesser von 15 mm und einer Dicke von 0,1 mm nach dem aus EP 0 961 038 bekannten Verfahren beschichtet.

Die Scheiben wurden aus einem Federbandstahl C75S QT mit einer Festigkeit 1200 - 1400 N/mm² gestanzt. Im Anschluß erfolgte die Beschichtung der Scheiben, wobei Diamantpartikel mit einem mittleren Durchmesser von 10 µm in eine Bindephase bestehend aus Chemisch Nickel mit einer Schichtdicke von etwa 6 µm eingebettet wurden. Abschließend wurde zur Verbesserung der Haftfähigkeit der Chemisch-Nickel-Schicht eine Wärmebehandlung bei 150°C über 2 Stunden vorgenommen. Die mittels optischer Bildauswertung bestimmte Flächenbelegung der Scheibenoberfläche betrug 12 ±1 %.

Zur Herstellung eines erfindungsgemäßen Bauteils wurden die beschichteten Scheiben mittels Laserschweißen auf die Oberfläche eines Probenkörpers aus Sint-D30 (Sinterstahl) aufgebracht. Die Auswahl des Probensubstrats erfolgte vor dem Hintergrund, dass dies ein gebräuchlicher Werkstoff für die Herstellung von Steuerrädern im Steuertrieb von Verbrennungsmotoren ist. Die Haltevorrichtung für den Schweißvorgang war so ausgelegt, dass auf einem Scheibenradius von etwa 11 mm 5 Schweißpunkte in einem Abstand von jeweils 72 Winkelgraden gesetzt werden konnten. Der Laserstrahl wurde senkrecht zur Scheibenoberfläche geführt, der Durchmesser des Laserstrahls betrug 0,5 mm. Die Laserschweißpunkte wurden mittels Querschliff, Laserscanning-Verfahren und REM untersucht und dokumentiert.

Die mittels Kopfzugtest ermittelte mittlere Abzugskraft bei 3 Schweißstellen betrug 43,1 N.

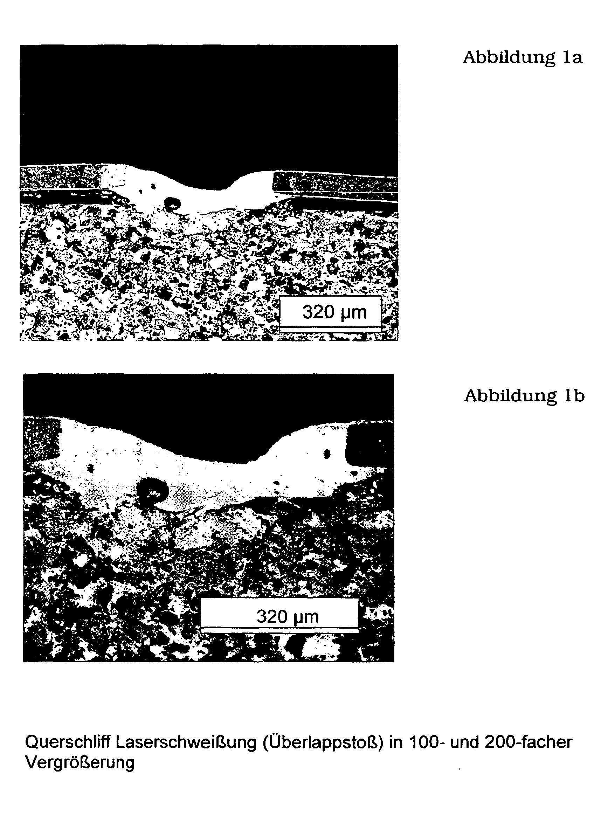

Die Schweißpunkte wurden an präparierten Querschliffen am Auflichtmikroskop vermessen. Der Bereich der Verschmelzung ist ca. 0,5 mm breit, was genau dem Durchmesser des Laserstrahls entspricht (s. Abbildungen 1a und 1b). Die Intensität des Laserstrahls wurde so gewählt, dass die Energie gut in das Material eingekoppelt wird und eine Aufschmelzung über den gesamten Laserstrahldurchmesser erfolgt. Durch den Wärmeverzug hebt die Reibscheibe um 0,06 mm von der Oberfläche des gesinterten Werkstücks ab, was einer Gesamthöhe von 0,16 mm entspricht. Die längste Ausdehnung des Abhebens der Scheibe vom Schweißpunkt bis zur erneuten planen Auflage auf dem Steuerrad ist etwa nach 1,7 mm erreicht. Der Laserstrahl führt in diesem Fall zu keiner "Kraterbildung" an den äußeren Rändern, sondern verläuft zur Mitte des Schweißpunktes hin "talwärts". (Kraterbildungen mit Aufwurf können verhindert bzw. geglättet werden durch gezieltes Wiederaufschmelzen der Fügestelle.) Außerhalb der Aufschmelzungszone erscheint die Beschichtung intakt.

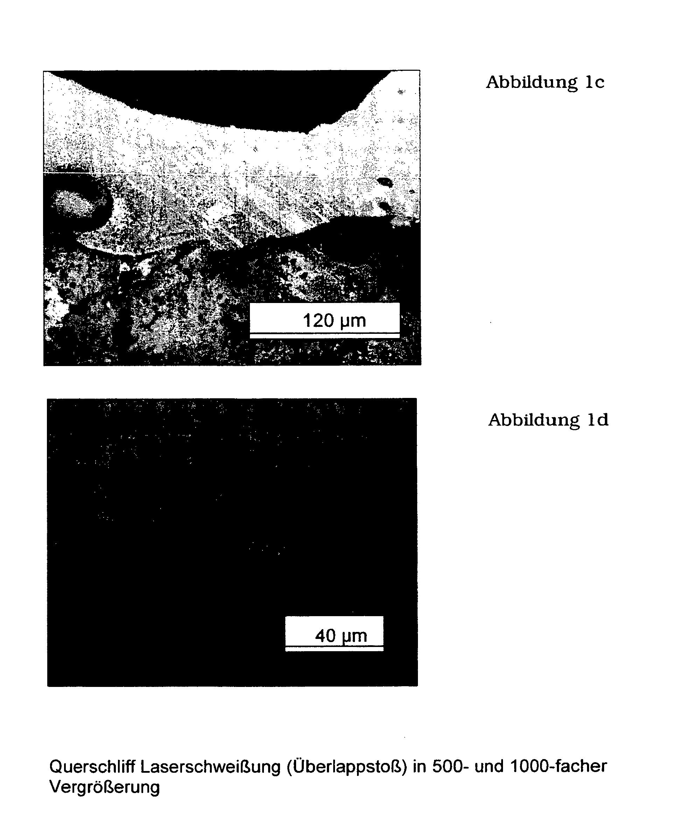

Eine 500- und 1000-fache Vergrößerung gemäß den Abbildungen 1c und 1d zeigt den homogenen Verschmelzungsbereich. Mit Ausnahme der gebildeten Pore, die durch die Porenanfälligkeit des gashaltigen Grundwerkstoffes (Sinterstahl) hervorgerufen wurde, ist eine qualitativ gute Verbindung entstanden. Die Chemisch-Nickel-Schicht und die Diamanten sind nicht mehr zu erkennen.

### Beispiel 2

### Laserschweißen Eckstoß

Eine Ausführung als Eckstoß kann beispielsweise dann sinnvoll sein, wenn in nicht planparallelen Fugen ausserhalb der Funktions-Eingriffsfläche gefügt werden soll. Durch schräge/nicht planparallele Fugen kann der mittlere Reibradius erhöht werden und präsente Umlaufbiegemomente und/oder Scherkräfte können unter Last kompensiert werden. Hier kann dann gezielt der Überlappstoß vermieden werden und alternativ der Eckstoß gewählt werden.

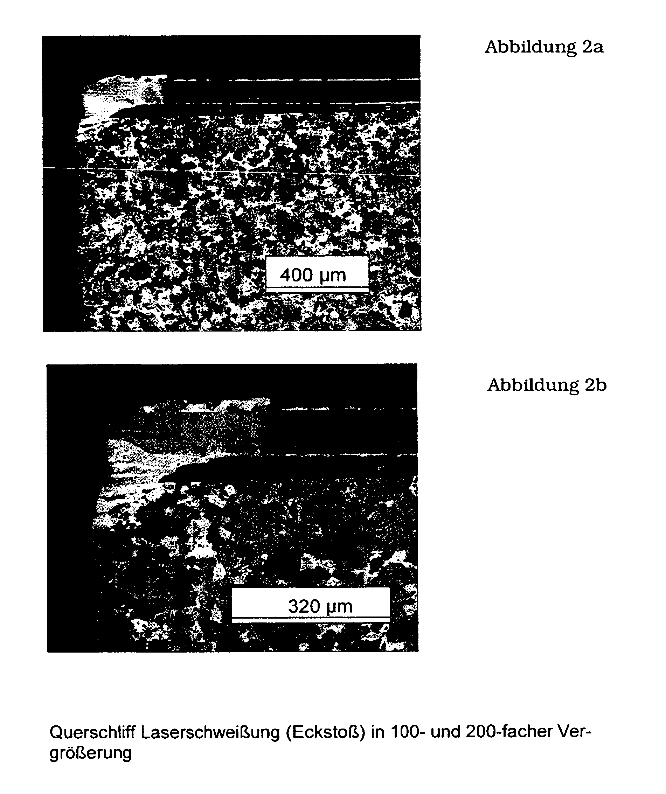

In den Abbildungen 2a und 2b ist eine als Eckstoß ausgeführte Laserschweiβung dargestellt (Querschliff).

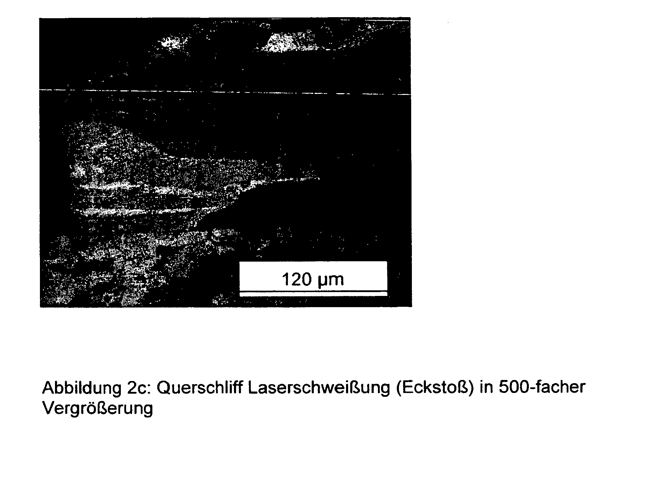

Bei dieser Stoßart schweißt der Laserstrahl gemäß den Abbildungen 2a und 2b von links, horizontal zwischen die Reibfolie und dem Werkstück. Der Verschmelzungsbereich ist 0,1mm breit (Abb. 2a). Die Beeinflussungszone der Scheibe, bei der unter anderem die Chemisch-Nickel-Schicht mit den darin eingebetteten Diamanten verdampft bzw. aufschmilzt, erstreckt sich über 0,36 mm, bei einer maximalen Erhöhung der Scheibe über der Oberfläche des Steuerrades von rund 0,17 mm. In der 200-fachen Vergrößerung (Abb. 2b) erkennt man die Wärmeeinflusszone des Sintermetalls, die im Mittel ca. 0,08 mm hoch und 0,12 mm breit ist. Zwischen den beiden verbundenen Komponenten ist die Spaltweite um die 0,05 mm, was der halben Dicke der Reibfolie entspricht.
Die Aufschmelzung an der direkten Kontaktfläche von Reibfolie und Sinterwerkstoff ist sehr homogen (s. Abbildung 2c). Die Wärmeeinflusszone an beiden Bauteilen ist gut zu erkennen.

Der Eckstoß erfordert eine sehr genaue Positionierung und Stoßformgenauigkeit der Fügeteile. Über den Einflussbereich der Laseraufschmelzung hinaus ist nach ca. 0,36 mm fast keine Beeinflussung der reibwerterhöhenden Chemisch-Nickel-Schicht mit eingebetteten Harstoffpartikeln auf beiden Seiten der Scheibe zu erkennen (Abb. 2a und 2b).

### Beispiel 3

### Widerstandspunktschweißung mit Sinterstahl als Grundkörper

Die Verbindungselemente wurden wie in Beispiel 1 beschrieben hergestellt. Als Grundkörper wurde Sint-D30 eingesetzt. Die Schweißung wurde als Widerstandspunktschweißung ausgeführt. Die Elektrodenanpresskraft wurde auf ca. 100 daN (= 1000 N) und der Schweißstrom auf ca. 2,9 - 3,4 kA eingestellt. Über den Schweißstrom und den elektrischen Widerstand der Baugruppe stellt sich die Schweißspannung automatisch ein.

Die mittels Kopfzugtest ermittelte mittlere Abzugskraft der geschweißten Verbindung betrug 173,3 N.

### Beispiel 4

### Ermittlung des Haftbeiwerts für die Verbindung Werkstück mit fixiertem Verbindungselement und zu fügeendes Werkstück

Für die Ermittlung des Haftbeiwertes µ unter Torsionsbeanspruchung wurden die auf den Probenkörper Sint-D30 fixierten Verbindungselemente gemäß Beispiel 1 gegen gehärtete Probenkörper 16 MnCr5 gepaart und mit einer Flächenpressung von 100 MPa gegeneinander verspannt. Mittels einer Hydraulik wurde jetzt ein Torsionsmoment bis zum Durchrutschen der Verbindung aufgebracht. Als Durchrutschen ist der Moment definiert, bei dem die Verbindung einen Verdrehwinkel von 4° erreicht hat. Aus dem ermittelten Torsionsmoment / Verdrehwinkel - Diagramm konnte dann der statische Haftbeiwert µ errechnet werden.

### Vergleichsbeispiel

### Ermittlung des Haftbeiwerts für die Verbindung zweier Werkstücke mit engelegtem Verbindungselement

Der Versuch aus Beispiel 4 wurde unter Beibehaltung der Einstellparameter mit der Werkstoffpaarung Sint-D30 und 16MnCr5 wiederholt, jedoch wurde das Verbindungselement nicht mit dem erfindungsgemäßen Verfahren fixiert, sondern nur eingelegt, wobei dieser Versuchsaufbau der in EP 0 961 038 beschriebenen Anwendung entspricht.

Zum Zwecke der Ergebnisabsicherung wurden je Probenpaarung drei Versuche durchgeführt. Die ermittelten Haftbeiwerte sind in der nachfolgenden Tabelle aufgeführt.

### Ergebnisse Untersuchung Haftbeiwert (Beispiel 4 und Vergleichsbeispiel)

Überraschenderweise wurde bei den geschweissten Verbindungselementen ein um etwa 10 % höherer Haftbeiwert und eine deutlich reduzierte Standardabweichung erreicht. Dieses Resultat war deshalb nicht zu erwarten, da das Laserschweissen im Bereich der Schweißpunkte zu einem lokalen Abheben der Scheibe in der Verbindungszone Sint-D30 - diamantbeschichtete Scheibe führt, wobei das Abheben in einem Umkreis von etwa 3 mm um den Schweisspunkt stattfindet. Damit reduziert sich die im Sinne der Reibungserhöhung wirksame, im Eingriff mit dem Probenkörper befindliche Scheibenfläche. Die mit dem Laserscanning-Verfahren durch erstarrte Schmelze festgestellte Überhöhung im Bereich des Schweisspunktes führt zu einer weiteren Reduzierung der wirksamen Fläche auf der Gegenseite der Verbindung zum Probenkörper 16MnCr5, da die Überhöhung ebenfalls ein vollständiges flächiges Aufliegen der diamantbeschichteten Scheibe auf der Verbindungsfläche des Probenkörpers 16MnCr5 unterbindet.

Dass trotz dieser zunächst als ungünstig erscheinenden Konstellation ein sogar deutlich höherer Haftbeiwert mit einer vorteilhaft reduzierten Standardabweichung erzielt wird, war keinesfalls vorhersehbar.

## Patentansprüche

1. Verfahren zum Fixieren eines Verbindungselements, das die reibungserhöhende, spielfreie, reversible Verbindung von zu fügenden Werkstücken ermöglicht, auf einem metallischen Werkstück, wobei das Verbindungelement aus einer metallischen Folie besteht, die an ihren Fügeoberflächen Hartstoffpartikel trägt, welche mittels einer metallischen Bindephase auf der metallischen Folie fixiert sind, **dadurch gekennzeichnet, dass** das Verbindungselement auf dem metallischen Werkstück durch Schweißen unter Ausbildung lokal begrenzter Schweißpunkte montage- und transportsicher fixiert wird.

2. Verfahren nach Anspruch 1, **dadurch gekennzeichnet, dass** das Schweißen durch ein Laserschweißen erfolgt.

3. Verfahren nach Anspruch 2, **dadurch gekennzeichnet, dass** für das Laserschweißen eine Nd:YAG-Festkörper-Laserschweißanlage verwendet wird.

4. Verfahren nach Anspruch 2 und/oder 3, **dadurch gekennzeichnet, dass** für das Laserschweißen gepulste Laser mit einer Wellenlänge von 900 bis 1200 nm, vorzugsweise über etwa 1000 nm, eingesetzt werden.

5. Verfahren nach mindestens einem der vorangehenden Ansprüche, **dadurch gekennzeichnet, dass** das Verbindungelement vor dem Schweißen auf dem metallischen Werkstück positioniert und angepresst wird, vorzugsweise mit einer Anspresskraft von 20 bis 100 N.

6. Verfahren nach Anspruch 1, **dadurch gekennzeichnet, dass** das Schweißen durch ein Widerstandspunktschweißen erfolgt.

7. Verfahren nach mindestens einem der vorangehenden Ansprüche, **dadurch gekennzeichnet, dass** das Verbindungselement durch eine ungerade Anzahl von Schweißpunkten, vorzugsweise 3 bis 7 Schweißpunkten, auf dem metallischen Werkstück fixiert wird.

8. Bauteil, bestehend aus einem metallischen Werkstück und einem darauf durch lokal begrenzte Schweißpunkte montage- und transportsicher fixierten Verbindungselement, wobei das Verbindungselement die reibungserhöhende, spielfreie, reversible Verbindung von zu fügenden Werkstücken ermöglicht und aus einer metallischen Folie besteht, die an ihren Fügeoberflächen Hartstoffpartikel trägt, welche mittels einer metallischen Bindephase auf der metallischen Folie fixiert sind.

9. Verfahren oder Bauteil nach mindestens einem der vorangehenden Ansprüche, **dadurch gekennzeichnet, dass** die metallische Folie des Verbindungselements eine Dicke von ≤ 0,2 mm, vorzugsweise 0,1-0,2 mm, aufweist.

10. Verfahren oder Bauteil nach mindestens einem der vorangehenden Ansprüche, **dadurch gekennzeichnet, dass** die metallische Folie des Verbindungselements eine federelastische Stahlfolie ist, vorzugsweise aus einem Stahl mit einer Zugfestigkeit von 350-1850 N/mm², weiter vorzugsweise von 800-1600 N/mm².

11. Verfahren oder Bauteil nach mindestens einem der vorangehenden Ansprüche, **dadurch gekennzeichnet, dass** die Hartstoffpartikel des Verbindungselements aus der Gruppe gewählt sind, bestehend aus Carbiden, Nitriden, Boriden, Diamant, SiO₂ und Al₂O₃, vorzugsweise aus der Gruppe, bestehend aus Diamant, Siliciumcarbid und Borcarbid.

12. Verfahren oder Bauteil nach mindestens einem der vorangehenden Ansprüche, **dadurch gekennzeichnet, dass** die Hartstoffpartikel des Verbindungselements eine Korngröße von 6 bis 80 µm und vorzugsweise eine mittlere Korngröße D₅₀ im Bereich von 8 bis 35 µm aufweisen.

13. Verfahren oder Bauteil nach mindestens einem der vorangehenden Ansprüche, **dadurch gekennzeichnet, dass** die metallische Bindephase des Verbindungselements eine galvanotechnisch erzeugte Chemisch-Nickel-Schicht ist.

14. Verfahren oder Bauteil nach mindestens einem der vorangehenden Ansprüche, **dadurch gekennzeichnet, dass** die metallische Bindephase des Verbindungselements eine Schichtdicke aufweist, welche geringer ist als die mittlere Korngröße der Hartstoffpartikel.

15. Verfahren oder Bauteil nach mindestens einem der vorangehenden Ansprüche, **dadurch gekennzeichnet, dass** das metallische Werkstück, auf welchem das Verbindungselement fixiert wird, aus einem Gusswerkstoff. Stahl, Aluminium, einer Aluminiumlegierung oder einem Sintermetall besteht.

16. Verwendung eines Bauteils gemäß mindestens einem der Ansprüche 8 bis 15 zur kraftschlüssigen, reibungserhöhenden, spielfreien, reversiblen Verbindung von zu fügenden Werkstücken im Maschinen-, Anlagen- und Kraftfahrzeugbau.

## Claims

1. A method for fixing on a metal workpiece a connecting element which permits the friction-increasing, play-free, reversible connection of workpieces to be joined, the connecting element comprising a metal foil which bears on its joining surfaces hard material particles, which are fixed on the metal foil by means of a metallic binder phase, **characterized in that** the connecting element is fixed on the metal workpiece securely for purposes of assembly and transportation by welding involving the formation of locally confined weld points.

2. The method as claimed in claim 1, **characterized in that** the welding is performed by laser welding.

3. The method as claimed in claim 2, **characterized in that** an Nd:YAG solid-state laser welding unit is used for the laser welding.

4. The method as claimed in claim 2 and/or 3, **characterized in that** pulsed lasers with a wavelength of 900 to 1200 nm, preferably over approximately 1000 nm, are used for the laser welding.

5. The method as claimed in at least one of the preceding claims, **characterized in that**, before the welding, the connecting element is positioned on the metal workpiece and pressed against it, preferably with a pressing force of 20 to 100 N.

6. The method as claimed in claim 1, **characterized in that** the welding is performed by resistance spot welding.

7. The method as claimed in at least one of the preceding claims, **characterized in that** the connecting element is fixed on the metal workpiece by an uneven number of weld points, preferably 3 to 7 weld points.

8. A component, comprising a metal workpiece and a connecting element fixed on it securely for purposes of assembly and transportation by locally confined weld points, the connecting element permitting the friction-increasing, play-free, reversible connection of workpieces to be joined and comprising a metal foil which bears on its joining surfaces hard material particles, which are fixed on the metal foil by means of a metallic binder phase.

9. The method or component as claimed in at least one of the preceding claims, **characterized in that** the metal foil of the connecting element has a thickness of ≤ 0.2 mm, preferably 0.1-0.2 mm.

10. The method or component as claimed in at least one of the preceding claims, **characterized in that** the metal foil of the connecting element is a spring-elastic steel foil, preferably of a steel with a tensile strength of 350-1850 N/mm², more preferably of 800-1600 N/mm².

11. The method or component as claimed in at least one of the preceding claims, **characterized in that** the hard material particles of the connecting element are selected from the group comprising carbides, nitrides, borides, diamond, SiO₂ and Al₂O₃, preferably from the group comprising diamond, silicon carbide and boron carbide.

12. The method or component as claimed in at least one of the preceding claims, **characterized in that** the hard material particles of the connecting element have a grain size of 6 to 80 µm and preferably an average grain size D₅₀ in the range from 8 to 35 µm.

13. The method or component as claimed in at least one of the preceding claims, **characterized in that** the metallic binder phase of the connecting element is a galvanotechnically produced layer of chemical nickel.

14. The method or component as claimed in at least one of the preceding claims, **characterized in that** the metallic binder phase of the connecting element has a layer thickness which is less than the average grain size of the hard material particles.

15. The method or component as claimed in at least one of the preceding claims, **characterized in that** the metal workpiece on which the connecting element is fixed consists of a cast material, steel, aluminum, an aluminum alloy or a sintered metal.

16. The use of a component according to at least one of claims 8 to 15 for the force-locked, friction-increasing, play-free, reversible connection of workpieces to be joined in machine, plant and motor vehicle construction.

## Revendications

1. Procédé de fixation d'un élément de liaison permettant la liaison réversible, augmentant le frottement et sans jeu de pièces d'oeuvres à assembler sur une pièce d'oeuvre métallique, l'élément de liaison étant constitué d'un film métallique qui sur ses surfaces d'assemblage porte des particules de matière dure qui au moyen d'une phase liante métallique sont fixées sur le film métallique, **caractérisé en ce que** l'on fixe l'élément de liaison de manière sécurisée au montage et au transport sur la pièce d'oeuvre métallique par soudage en créant des points de soudage localement limités.

2. Procédé selon la revendication 1, **caractérisé en ce que** le soudage s'effectue par soudage au laser.

3. Procédé selon la revendication 2, **caractérisé en ce que** pour le soudage au laser, on utilise un poste de soudage au laser de corps solides YAG:Nd.

4. Procédé selon la revendication 2 et/ou la revendication 3, **caractérisé en ce que** pour le soudage au laser, on utilise des lasers pulsés d'une longueur d'ondes de 900 à 1200 nm, de préférence sur environ 100 nm.

5. Procédé selon au moins l'une quelconque des revendications précédentes, **caractérisé en ce qu'**avant le soudage au laser, on positionne et on applique par pression l'élément de liaison sur la pièce d'oeuvre métallique, de préférence avec une force de pression de 20 à 100 N.

6. Procédé selon la revendication 1, **caractérisé en ce que** le soudage s'effectue par un soudage par résistance par points.

7. Procédé selon au moins l'une quelconque des revendications précédentes, **caractérisé en ce qu'**on fixe l'élément de liaison sur la pièce d'oeuvre métallique par un nombre impair de points de soudage, de préférence de 3 à 7 points de soudage.

8. Composant, constitué d'une pièce d'oeuvre métallique et d'un élément de liaison fixé sur ce dernier de manière sécurisée au montage et au transport par des points de soudage localement délimités, l'élément de liaison permettant la liaison réversible, augmentant la friction et sans jeu de pièces d'oeuvre à assembler et d'un film métallique, qui sur ses surfaces d'assemblage porte des particules de matière dure qui sont fixées sur le film métallique au moyen d'une phase liante métallique.

9. Procédé ou composant selon au moins l'une quelconque des revendications précédentes, **caractérisé en ce que** le film métallique de l'élément de liaison présente une épaisseur de ≤ 0,2 mm, de préférence de 0,1 à 0,2 mm.

10. Procédé ou composant selon au moins l'une quelconque des revendications précédentes, **caractérisé en ce que** le film métallique de l'élément de liaison est une feuille d'acier, de préférence en un acier d'une résistance à la traction de 350 à 1850 N / mm², de manière encore plus préférée de 800 à 1600 N/mm².

11. Procédé ou composant selon au moins l'une quelconque des revendications précédentes, **caractérisé en ce que** les particules de matière dure de l'élément de liaison sont choisies dans le groupe composé des carbures, des nitrures, des borures, du diamant, du SiO₂ et de l'Al₂O₃, de préférence dans le groupe composé du diamant, du carbure de silicium et du carbure de bore.

12. Procédé ou composé selon au moins l'une quelconque des revendications précédentes, **caractérisé en ce que** les particules de matière dure de l'élément de liaison présentent une grosseur de grains de 6 à 80 µm et de préférence une grosseur de grains moyenne D₅₀ de l'ordre de 8 à 35 µm.

13. Procédé ou composant selon au moins l'une quelconque des revendications précédentes, **caractérisé en ce que** la phase liante métallique de l'élément de liaison est une couche de nickel chimique créée par galvanotechnique.

14. Procédé ou composant selon au moins l'une quelconque des revendications précédentes, **caractérisé en ce que** la phase liante métallique de l'élément de liaison présente une épaisseur de couche qui est inférieure à la grosseur de grains moyenne des particules de matière dure.

15. Procédé ou composant selon au moins l'une quelconque des revendications précédentes, **caractérisé en ce que** la pièce d'oeuvre métallique sur laquelle on fixe l'élément de liaison est constituée d'un alliage de fonderie, d'acier, d'aluminium, d'un alliage d'aluminium ou d'un métal fritté.

16. Utilisation d'un composant selon au moins l'une quelconque des revendications 8 à 15 pour la liaison réversible, par complémentarité de force, augmentant la friction, sans jeu de pièces d'oeuvre à assembler dans la construction mécanique, la construction d'installations, la construction automobile.
